# EUROPEAN PATENT APPLICATION

(11) **EP 4 184 614 A1**
(43) Date of publication of application: **24.05.2023**
(21) Application number: 21842058.6
(22) Date of filing: 07.07.2021
(51) Int. Cl.: H01M 4/505, H01M 4/525

(54) **POSITIVE ELECTRODE ACTIVE MATERIAL FOR LITHIUM ION SECONDARY BATTERY, AND LITHIUM ION SECONDARY BATTERY IN WHICH SAME IS USED**

(30) Priority: 14.07.2020 JP 2020120366
(71) Applicant: Hitachi Metals, Ltd., Tokyo 135-0061 (JP)
(72) Inventor: TOKORO, Hisato, Tokyo 108-8224 (JP); TAKANO, Shuichi, Tokyo 108-8224 (JP); NAKABAYASHI, Takashi, Tokyo 108-8224 (JP); TAKAHASHI, Shin, Tokyo 108-8224 (JP)
(74) Representative: Becker, Eberhard
(86) International application number: PCT/JP2021/025695
(87) International publication number: WO 2022/014449

(57) **Abstract**

Provided is a positive electrode active material for a lithium ion secondary battery, the positive electrode active material having high capacity and exceptional coatability due to comprising both an oil absorption amount and powder physical properties suitable therefor. This positive electrode active material for a lithium ion secondary battery comprises a lithium transition metal composite oxide powder represented by formula (1), having primary particles and secondary particles in which the primary particles are aggregated. In the positive electrode active material for a lithium ion secondary battery, the oil absorption amount, based on JIS K5101-13-1, of NMP (N-methyl-2-pyrrolidone) per 100 g of the lithium transition metal composite oxide powder is 19-30 mL/100 g, and the sphericity represented by the ratio A/B of the short axis A and the long axis B of the secondary particles measured from an SEM image is 0.88≤A/B≤1.0. Formula (1): Li₁₊ₐNi_{b}Co_{c}M_{d}XₑO_{2+α} [In compositional formula (1), M is at least one element selected from Al and Mn, X is at least one element other than Li, Ni, Co, Al, and Mn, -0.1≤a≤0.1, 0.8≤b<1.0, 0≤c≤0.2, 0≤d≤0.2, 0≤e≤0.05, b+c+d+e=1, and -0.2≤α≤0.2.]

## Description

### [Technical Field]

The present invention relates to a positive electrode active material for a lithium ion secondary battery and a lithium ion secondary battery in which the same is used.

### [Background Art]

Lithium ion secondary batteries are widely used as lightweight secondary batteries with high energy density, and with the expansion of the applications thereof, there is a demand for even higher energy densities.

Under such circumstances, from the viewpoint of stable manufacturing, it is important to improve the coatability of the electrode as well as increase the capacity of the positive electrode active material, which greatly affects the battery characteristics. In order to obtain a secondary battery with high energy density, not only the energy density of the positive electrode active material alone, but also the energy density of the positive electrode in which the binder and the conductive material are mixed is required. In general, a positive electrode is manufactured by coating a current collecting foil with a paint obtained by kneading a positive electrode active material, a binder, a conductive material, and the like, drying the paint, and then pressure molding the paint. The purpose of pressure molding is to improve the electrode density, and pressure molding is repeated until a predetermined density is achieved. At this time, when the binder is not sufficiently dispersed, void regions with insufficient binder appear in the electrode, and the binding force within the positive electrode active material or between the positive electrode active material and the current collecting foil is reduced. As a result, before the electrode density is improved, the electrode cracks or the positive electrode mixture layer peels off from the current collecting foil.

To address this problem, for example, Patent Literature 1 discloses that the amount of dibutyl phthalate dibutyl phthalate (DBP) absorbed per 100 g of the positive electrode active material is controlled to be 20 to 40 mL/100 g, thereby increasing the electrode peel strength and improving the cycle characteristics. As an index for avoiding binder shortage, the specific surface area value measured by a gas adsorption method is generally used. However, it is stated that this index is not suitable and actually, making a determination by the DBP absorption amount measured with a solution (refer to paragraph 0052) is more suitable for an index.

Further, Patent Literature 2 discloses that an N-methyl-2-pyrrolidone (NMP) oil absorption amount per 100 g of the positive electrode active material (hereinafter referred to as oil absorption amount) is controlled to be 30 to 50 mL/100 g to improve coatability. In addition, it is stated that the oil absorption amount is effective means as means to easily understand the characteristics of the surface of the material that have not appeared in the conventional bulk powder characteristics such as particle size distribution, specific surface area, and tap density (refer to paragraph 0013). However, although a suitable range of oil absorption amount for maintaining coatability can be defined, it is difficult to define the oil absorption amount itself based on the conventional particle size distribution, specific surface area, and tap density.

### [Citation List]

### [Patent Literature]

[Patent Literature 1]
   Japanese Patent Laid-Open No. 2005-285606
[Patent Literature 2]
   International Publication No. 2010/064504

### [Summary of Invention]

### [Technical Problem]

In Patent Literature 1 and Patent Literature 2, although a suitable range of oil absorption amount for maintaining coatability can be specified, it is difficult to control the oil absorption amount itself, and it is difficult to obtain stable coatability simply by controlling the oil absorption amount. That is, conventionally, although an "oil absorption amount" was considered to be suitable as an index for determining the coatability of electrodes, there was no clear index for the definition of oil absorption amount and the suitability of powder physical properties. Moreover, even when the oil absorption amount is within a suitable range for obtaining exceptional coatability, the capacity of the positive electrode active material may decrease.

Accordingly, an object of the present invention is to provide a positive electrode active material for a lithium ion secondary battery which has a high capacity and exceptional coatability, and a lithium ion secondary battery in which the same is used.

### [Solution to Problem]

According to the present invention, there is provided a positive electrode active material for a lithium ion secondary battery comprising a lithium transition metal composite oxide powder represented by formula (1) below, having secondary particles in which a plurality of primary particles are aggregated, in which an oil absorption amount, based on JIS K5101-13-1, of N-methyl-2-pyrrolidone (NMP) per 100 g of the lithium transition metal composite oxide powder is 19 to 30 mL/100 g, and a sphericity represented by a ratio A/B for a short axis A and a long axis B of the secondary particles measured from an SEM image is 0.88 ≤ A/B ≤ 1.0.

Li₁₊ₐNi_{b}Co_{c}M_{d}XₑO_{2+α} (1)

[In compositional formula (1), M is at least one element selected from Al and Mn, X is at least one element other than Li, Ni, Co, Al, and Mn, and -0.1 ≤ a ≤ 0.1, 0.8 ≤ b < 1.0, 0 ≤ c ≤ 0.2, 0 ≤ d ≤ 0.2, 0 ≤ e ≤ 0.05, b + c + d + e = 1, and -0.2 ≤ α ≤ 0.2 are satisfied.]

As described above, both the oil absorption amount for good coatability and powder physical properties suitable for this are provided, and thus high capacity and good coatability can be achieved.

It is preferable that the lithium transition metal composite oxide powder according to the positive electrode active material for a lithium ion secondary battery of the present invention have an average particle size of 6 to 15 µm and a specific surface area of 0.1 to 0.6 m²/g. As a result, the manufacturing of the positive electrode can be further facilitated while keeping the oil absorption amount in a suitable range.

Further, it is preferable that the powder filling density when the lithium transition metal composite oxide powder is compressed at 0.01 MPa be 1.65 to 2.20 Mg/m³. Accordingly, it becomes easier to control the oil absorption amount to be in a suitable range.

The present invention is a lithium ion secondary battery including a positive electrode containing the positive electrode active material for a lithium ion secondary battery described above.

In addition, the positive electrode active material for a lithium ion secondary battery described above is also involved in a method for manufacturing a positive electrode active material for a lithium ion secondary battery, the method including: a mixing step of mixing compounds containing metal elements Li, Ni, Co, M, and X in the compositional formula (1); a granulation drying step of granulating and drying the raw material mixture slurry obtained in the mixing step to obtain granules; a firing step of firing the granules to obtain the lithium transition metal composite oxide powder represented by the compositional formula (1); and an inspection step of using the powder filling density when the lithium transition metal composite oxide powder is compressed.

### [Advantageous Effects of Invention]

According to the present invention, it is possible to provide a positive electrode active material for a lithium ion secondary battery which has a high capacity and exceptional coatability, and a lithium ion secondary battery in which the same is used.

### [Brief Description of Drawings]

Fig. 1 is a flowchart showing an example of a method for manufacturing a positive electrode active material.
Fig. 2 is a diagram showing a relationship between an oil absorption amount and a sphericity in positive electrode active materials for a lithium ion secondary battery according to Examples and Comparative Examples.
Fig. 3 is a diagram showing a relationship between an average particle size and a sphericity, and between a specific surface area and a sphericity in the positive electrode active materials for a lithium ion secondary battery according to Examples and Comparative Examples.
Fig. 4 is a diagram showing a relationship between an oil absorption amount and powder filling density in positive electrode active materials for a lithium ion secondary battery according to Examples and Comparative Examples.
Fig. 5 is a diagram showing a relationship between a discharge capacity and an oil absorption amount in positive electrode active materials for a lithium ion secondary battery according to Examples.
Fig. 6 is an SEM photograph obtained by scanning electron microscope according to Example 3 (sphericity of 0.93).

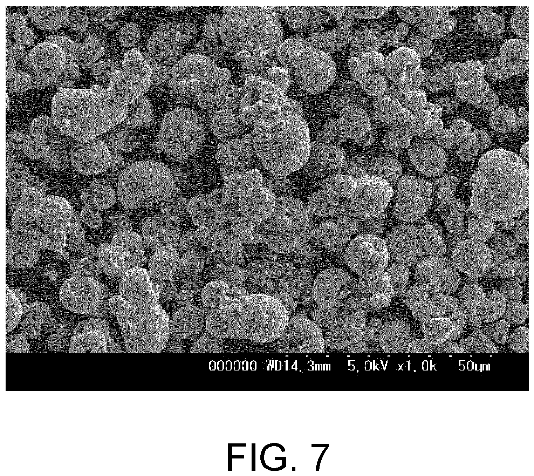

Fig. 7 is an SEM photograph obtained by scanning electron microscope according to Comparative Example 2 (sphericity of 0.81).
Fig. 8 is a partial cross-sectional view schematically showing an example of a lithium ion secondary battery.

### [Description of Embodiments]

A positive electrode active material for a lithium ion secondary battery (hereinafter referred to as a positive electrode active material) according to one embodiment of the present invention, a method for controlling an oil absorption amount of this positive electrode active material, and a lithium ion secondary battery will be described below. In addition, the same symbols are used to denote components which are the same below, and duplicated description thereof will be omitted. In addition, a case where a numerical range is indicated by "to" means "or more" and "or less".

### <Positive Electrode Active Material>

The positive electrode active material according to the present embodiment has an α-NaFeO₂ type crystal structure exhibiting a layered structure, and contains a lithium transition metal composite oxide powder containing lithium and a transition metal (hereinafter simply referred to as powder). This positive electrode active material contains primary particles of lithium transition metal composite oxide powder, and is mainly composed of secondary particles formed by agglomeration of a plurality of primary particles. Moreover, the lithium transition metal composite oxide powder has, as a main phase, a layered structure capable of intercalating and deintercalating lithium ions.

The positive electrode active material according to the present embodiment may contain unavoidable impurities derived from raw materials and manufacturing processes in addition to the lithium transition metal composite oxide powder as the main component. In addition, other components that coat the particles of the lithium transition metal composite oxide powder, such as boron components, phosphorus components, sulfur components, fluorine components, and organic substances, and other components that are mixed with the particles of the lithium transition metal composite oxide powder, and the like may be contained.

The positive electrode active material according to the present embodiment contains a lithium transition metal composite oxide powder represented by the following compositional formula (1):

Li₁₊ₐNi_{b}Co_{c}M_{d}XₑO_{2+α} (1)

[In compositional formula (1), M is at least one element selected from Al and Mn, X is at least one element other than Li, Ni, Co, Al, and Mn, and -0.1 ≤ a ≤ 0.1, 0.8 ≤ b < 1.0, 0 ≤ c ≤ 0.2, 0 ≤ d ≤ 0.2, 0 ≤ e ≤ 0.05, b + c + d + e = 1, and -0.2 ≤ α ≤ 0.2 are satisfied.]

In the lithium transition metal composite oxide powder represented by the compositional formula (1), the proportion of nickel in metals excluding lithium is 80% or more. That is, the Ni content is 80 at% or more in atomic number fraction with respect to the sum of Ni, Co, M, and X. Since the content of nickel is high, it is a high-nickel-based oxide capable of realizing high charge/discharge capacity. In addition, since the nickel content is high, raw material costs are lower than those of LiCoO₂ and the like, and exceptional productivity including raw material costs is exhibited.

In general, a lithium transition metal composite oxide powder with a high nickel content tends to have an unstable crystal structure. In the crystal structure, Ni forms a layer composed of MeO₂ (Me is used to represent a metal element such as Ni), and tetravalent Ni is abundant. Tetravalent Ni becomes stable divalent Ni and easily occupies the Li sites (this state is called cation mixing), and thus it transitions from near the surface of the crystal structure to a NiO-like crystal structure, resulting in a decrease in capacity and an increase in resistance.

Here, the significance of the numerical ranges of a, b, c, d, e, and α in the formula (1) will be described.

In the above formula, a is -0.1 or more and 0.1 or less. a is used to represent the stoichiometric ratio in the lithium composite compound represented by the general formula: LiM1O₂, that is, excess or deficiency of lithium from Li:M1 :O = 1:1:2. When the amount of lithium is extremely low, the charge/discharge capacity of the positive electrode active material will be low. On the other hand, when the amount of lithium is excessively high, charge/discharge cycle characteristics deteriorate. When a is within the above numerical range, both high charge/discharge capacity and good charge/discharge cycle characteristics can be achieved.
a may be -0.02 or more and 0.05 or less. When a is -0.02 or more, an amount of lithium sufficient to contribute to charge and discharge is ensured, and thus the charge/discharge capacity of the positive electrode active material can be increased. Further, when a is 0.05 or less, sufficient charge compensation due to the change in valence of the transition metal is achieved, and thus both high charge/discharge capacity and good charge/discharge cycle characteristics can be achieved.

The coefficient b of nickel is set to 0.8 or more and less than 1.0. When b is 0.8 or more, sufficiently high charge/discharge capacity can be obtained as compared with the case of using other transition metals. Therefore, when b is within the above numerical range, a positive electrode active material exhibiting a high charge/discharge capacity can be manufactured at a lower cost than LiCoO₂ or the like.
b is preferably 0.8 or more and 0.95 or less, and more preferably 0.85 or more and 0.95 or less. When b is 0.8 or more, as b increases, higher charge/discharge capacity can be obtained. In addition, when b is 0.95 or less, as b decreases, the lattice distortion or crystal structure change accompanying the intercalation or deintercalation of lithium ions becomes small, and at the time of firing, cation mixing in which nickel is mixed into lithium sites and deterioration of crystallinity are less likely to occur. Therefore, deterioration of charge/discharge capacity and charge/discharge cycle characteristics is suppressed.

The coefficient c of cobalt is 0 or more and 0.2 or less. When cobalt is added, the crystal structure is stabilized, and effects such as suppression of cation mixing in which nickel is mixed into the lithium site are obtained. Therefore, the charge/discharge cycle characteristics can be improved without significantly deteriorating the charge/discharge capacity. On the other hand, when there is an excess of cobalt, the raw material costs will increase, which will increase the manufacturing cost of the positive electrode active material. When c is within the above numerical range, both high charge/discharge capacity and good charge/discharge cycle characteristics can be achieved with good productivity.
c may be 0.01 or more and 0.2 or less, or may be 0.03 or more and 0.2 or less. When c is 0.01 or more, as c increases, the effect of the substitution of cobalt is more sufficiently obtained, and the charge/discharge cycle characteristics are further improved. Moreover, when c is 0.2 or less, the raw material costs will be lower, and the productivity of the positive electrode active material will be better.

The coefficient d of M is 0 or more and 0.2 or less. When nickel is substituted with at least one element (M) selected from the group consisting of manganese and aluminum, the layered structure is more stably maintained even when lithium is deintercalated by charging. On the other hand, when there are an excess of these elements (M), the proportion of other transition metals such as nickel will decrease, and the charge/discharge capacity of the positive electrode active material will deteriorate. When d is within the above numerical range, the crystal structure of the positive electrode active material can be stably maintained, and high charge/discharge capacity, good charge/discharge cycle characteristics, thermal stability, and the like can be obtained.

As the element represented by M, manganese and aluminum are preferable. Such elements contribute to stabilizing the crystal structure of positive electrode materials with high nickel content. Among them, manganese is particularly preferable. When manganese is substituted for nickel, a higher charge/discharge capacity can be obtained than when aluminum is substituted. Manganese also reacts with lithium carbonate as shown in the following formula (2) during firing of the lithium composite compound. Such a reaction suppresses the coarsening of crystal grains and allows the oxidation reaction of nickel to proceed at high temperature, and thus it is possible to efficiently obtain a positive electrode active material exhibiting a high charge/discharge capacity.

2Li₂Co₃ + 4M'O + O₂ -> 4LiM'O₂ + 2CO₂ ... (2)

(This is provided that, in the above formula (2), M' is used to represent a metal element such as Ni, Co, Mn.)

d is preferably an integer of 0.02 or more, and more preferably an integer of 0.04 or less. As d increases, the effect of the substitution of manganese is more sufficiently obtained. That is, it becomes possible for the oxidation reaction of nickel to proceed at a higher temperature, and it is possible to more efficiently obtain a positive electrode active material exhibiting a high charge/discharge capacity. In addition, d is preferably 0.18 or less. When d is 0.18 or less, a high charge/discharge capacity can be maintained even with substitution.

The coefficient e of X is 0 or more and 0.05 or less. X is at least one element other than Li, Ni, Co, Al, and Mn. At least one element selected from Mg, Ti, Zr, Mo, and Nb is preferable. When the metal element (X) is substituted, various performances such as charge/discharge cycle characteristics can be improved while maintaining the activity of the positive electrode active material. On the other hand, when there are an excess of these elements (X), the proportion of other transition metals such as nickel will decrease, and the charge/discharge capacity of the positive electrode active material will deteriorate. When e is within the above numerical range, both high charge/discharge capacity and good charge/discharge cycle characteristics can be achieved.
α in the formula (1) is set to -0.2 or more and 0.2 or less. α is used to represent the stoichiometric ratio in the lithium composite compound represented by the general formula: LiM'O₂, that is, excess or deficiency of oxygen from Li:M' :O = 1:1:2. When α is within the above numerical range, the crystal structure has few defects, and high charge/discharge capacity and good charge/discharge cycle characteristics can be obtained.

### <Method for Manufacturing Positive Electrode Active Material>

A method for manufacturing the positive electrode active material will be described below.

A method for manufacturing a positive electrode active material according to the present embodiment includes a mixing step S10 of mixing compounds containing metal elements Li, Ni, Co, M, and X in the compositional formula (1); a granulation drying step S20 of granulating and drying the raw material mixture slurry obtained in the mixing step with a spray dryer or the like to obtain granules; a firing step S30 of firing the granules to obtain the lithium transition metal composite oxide powder represented by the compositional formula (1); and an inspection step S40 of using the powder filling density when the lithium transition metal composite oxide powder is compressed. The lithium transition metal composite oxide powder is primary particles and secondary particles formed by agglomeration of a plurality of primary particles.

Lithium carbonate, lithium hydroxide, or the like is used as the starting material of the Li compound. Carbonates, hydroxides, oxides, carbides and the like can be used as compounds containing metal elements such as Ni, Co, M, and X. The compounds containing the metal element may be compounds independent for each element, or compounds containing a plurality of elements at the same time. For example, hydroxides such as NiCo(OH)₂ obtained by the coprecipitation method may be used.

In the mixing step S10, a compound containing lithium and a compound containing a metal element other than Li in the compositional formula (1) are mixed, or only a compound containing a metal element other than Li in the compositional formula (1) is mixed. For example, by weighing, pulverizing and mixing these raw materials, a powder-like mixture in which the raw materials are uniformly mixed can be obtained. As a pulverizer for pulverizing the raw material, for example, general precision pulverizers such as media mills, attritors, ball mills, jet mills, rod mills, and sand mills can be used. Pulverization and mixing with pulverization are preferable for uniformly mixing the compounds of the starting materials. After dry pulverization, a solvent such as water may be added to form a slurry composed of the raw materials and the solvent, a solvent such as water may be added to the raw material in advance to form a slurry, and then wet pulverization is performed. Mixing may be performed by obtaining a uniform and fine powder having an average particle size of 0.3 µm or less, preferably 0.1 µm or more and 0.3 µm or less, and from the viewpoint of obtaining a uniform and fine powder having an average particle size of 0.3 µm or less, it is more preferable to perform wet pulverization using a medium such as water. Particularly in the case of wet pulverization and mixing, it is effective to increase the solid content ratio of the starting material compound with respect to the solvent in order to improve production efficiency. The solid content ratio is preferably from 10% by mass to 40% by mass, more preferably from 15% by mass to 30% by mass. When the solid content ratio is increased, the slurry viscosity increases when pulverization and mixing was performed, causing difficulties in handling such as a difficulty in stirring and transferring the slurry. Therefore, it is preferable to add a dispersant to obtain an appropriate slurry viscosity. The slurry viscosity is preferably 1000 mPa s or less, more preferably 800 mPa s or less, and still more preferably 600 mPa s or less. Within the suitable range, stable manufacturing can be achieved.

A spray granulator such as a spray dryer, an evaporator, a vacuum dryer, or the like can be used for drying the raw material mixture slurry. In the granulation drying step S20, the particle size and shape of the granules can be controlled by using a spray dryer. Various systems such as a two-fluid nozzle system, a four-fluid nozzle system, and a disk system can be used as the spray dryer. In the case of the spray granulation method, the slurry precisely mixed and pulverized by wet pulverization can be granulated while being dried. In addition, by adjusting the slurry concentration, spray pressure, disk rotation speed, and the like, it is possible to precisely control the particle size of the secondary particles within a predetermined range, and it is possible to efficiently obtain granules that are nearly spherical and have a uniform chemical composition. In the granulation drying step S20, it is preferable to granulate the mixture obtained in the mixing step S10 such that the average particle size (D50) is 3 µm or more and 50 µm or less. In the present embodiment, the secondary particles of the more preferable granules have an average particle size (D50) of 5 µm or more and 20 µm or less. The average particle size of the raw material powder and granulated secondary particles can be measured with a laser diffraction type particle size distribution measuring instrument or the like.

When only the compound containing a metal element other than Li in the compositional formula (1) is mixed in the mixing step S10, the compound containing lithium and the granules obtained in the granulation drying step S20 are mixed. Mixing is preferably dry mixing, and various methods such as a V-type mixer and an attritor can be used. In addition, the granules may be heat-treated in advance before mixing.

An electric furnace or a gas furnace is used in the firing step S30. The granules granulated in the granulation drying step S20 are heat-treated to fire the lithium transition metal composite oxide represented by the compositional formula (1). The firing step S30 may be performed by a single heat treatment in which the heat treatment temperature is controlled within a certain range, or may be performed by a plurality of heat treatments in which the heat treatment temperatures are controlled within different ranges. From the viewpoint of obtaining a lithium transition metal composite oxide exhibiting high discharge capacity and capacity retention rate, a pre-firing stage held at 450°C or higher and 730°C or lower and a main firing stage held at 750°C or higher and 900°C or lower are preferably included. Further, after the main firing stage, the temperature may be maintained at a temperature of 500°C or higher and lower than the heat treatment temperature in the main firing stage. The preferable firing temperature and holding time in the firing step are adjusted according to the composition within the range shown by the compositional formula (1), and various physical properties of the lithium transition metal composite oxide powder after firing (oil absorption amount, powder filling density, sphericity, specific surface area, average particle size, and the like) are fired to be in the suitable range.

Here, in order to achieve both an improvement in production efficiency and stable manufacturing in the mixing step, for example, when the solid content ratio is set to 50% by mass, the amount of dispersant added to make the slurry viscosity within a suitable range is increased, and non-spherical (irregularly shaped) granulated powder is formed in the next granulation drying step. When a spray dryer is used as equipment, ellipsoidal particles with a depressed center or ring-shaped particles with a hollow center are formed. Such irregularly-shaped particles remain even after firing, and the powder filling density of the obtained lithium transition metal composite oxide decreases. A decrease in powder filling density means an increase in gaps between the particles within the powder. When a positive electrode is fabricated using the lithium transition metal composite oxide powder as a positive electrode active material, even when a predetermined amount of binder is added, the binder enters the gaps between the particles and the binding force between the particles decreases, resulting in poor coating. Therefore, a powder with few gaps between the particles, that is, a powder with a high powder filling density can realize good coatability.

In the case of chemical synthesis using a coprecipitation method, pulverization and mixing itself may be omitted. Further, when the coprecipitation method is used, granulation is unnecessary, and after drying, a raw material mixed powder can be obtained by mixing a compound of Li after drying.

The incorporation of non-spherical (irregularly shaped) particles in the above mixing step also causes deterioration of the powder filling density of the lithium transition metal composite oxide powder after firing, resulting in poor coating when fabricating the positive electrode as a positive electrode active material. Therefore, in order to keep the powder filling density high, the particle shape is preferably spherical. Therefore, in the present embodiment, the following oil absorption amount and sphericity are used as indices.

### [Oil Absorption Amount]

The positive electrode active material according to the present embodiment is a powder of primary particles of the lithium transition metal composite oxide powder and secondary particles in which the primary particles are aggregated, and the oil absorption amount of N-methyl-2-pyrrolidone (NMP) per 100 g of powder is 19 mL or more and 30 mL or less, that is, 19 to 30 mL/100 g. It is preferable that the oil absorption amount be 22 to 29 mL/100 g, and more preferably 23 to 26 mL/100 g. In addition, it is preferable that the solvent used for measuring the oil absorption amount be the same as the solvent used in the mixture adjustment step in electrode fabrication, which will be described later. Since the mixture is adjusted by using N-methyl-2-pyrrolidone (NMP), which is highly versatile as a solvent, in electrode fabrication, the oil absorption amount of NMP is also evaluated in the present embodiment. Here, when the oil absorption amount is less than 19 mL/100 g, although a small amount of binder can be used when manufacturing the electrode, the particle size is actually extremely coarse, and the gaps between the primary particles and the unevenness of the particles are extremely small. This is not preferable because the total surface area in contact with the electrolytic solution is small, and sufficient discharge capacity cannot be obtained when functioning as an electrode. Moreover, when the oil absorption amount exceeds 30 mL/100 g, the amount of binder required to synthesize an appropriate electrode increases, and the minimum amount of binder required to obtain the binding force increases. When the amount of the binder added increases, the content of the positive electrode active material in the electrode decreases, which is not preferable because the energy density decreases. Alternatively, when an electrode is fabricated with a fixed amount of binder in order to ensure a predetermined energy density, the binder is insufficient, resulting in insufficient binding force. This is not preferable because cracks and electrode peeling are caused during pressure molding. In other words, by setting the oil absorption amount in the above suitable range, an electrode with a high energy density can be obtained.

Furthermore, the oil absorption amount is measured according to JIS K5101-13-1. Details will be described later.

### [Sphericity]

In manufacturing the positive electrode, it is preferable to increase the content of the positive electrode active material and reduce the amount of the binder as much as possible from the viewpoint of increasing the energy density. For this purpose, it is necessary to reduce the gaps between the particles as much as possible, and the particle shape is preferably spherical or nearly spherical. Therefore, in order to quantitatively express the shape of the particles, in the present embodiment, the short axis A and the long axis B of the secondary particles measured from the SEM photograph by a scanning electron microscope (SEM) were measured, and A/B was defined as the sphericity. Regarding the short axis A, a circular figure smaller than the secondary particle was pasted on the electronic image of one secondary particle, the maximum circle obtained by enlarging the circular figure not to protrude the secondary particle image was taken as the inscribed circle, and the diameter of the inscribed circle was taken as the short axis A for the measurement. On the other hand, regarding the long axis B, the smallest circle among the circles with which the outer edges of the secondary particles are in contact inside was taken as the circumscribed circle, and the diameter of the circumscribed circle was taken as the long axis B for the measurement.

The positive electrode active material according to the present embodiment has an oil absorption amount and a sphericity within an appropriate range. The above-described sphericity represented by the ratio A/B between the short axis A and the long axis B of the secondary particles is set to 0.88 ≤ A/B ≤ 1.0. When the sphericity is less than 0.88, the particle shape will be irregular and the number of gaps between the particles will increase, which is not preferable because the powder filling density does not reach the suitable range. In order to achieve a high powder filling density and a small oil absorption amount, the particle shape is preferably spherical or nearly spherical, and A/B is 0.88 or more and 1.0 or less. Considering actual manufacturing variations, the sphericity is preferably 0.89 to 1.0, and more preferably 0.90 to 1.0.

Furthermore, in the measurement of the sphericity, 20 particles having a particle size within the range of (average particle size × 0.5) to (average particle size × 2.0) were extracted from the SEM image of each sample, the diameter of the inscribed circle was measured as the short axis A and the diameter of the circumscribed circle was measured as the long axis B, and the average value of 20 A/B was taken as the sphericity of the sample.

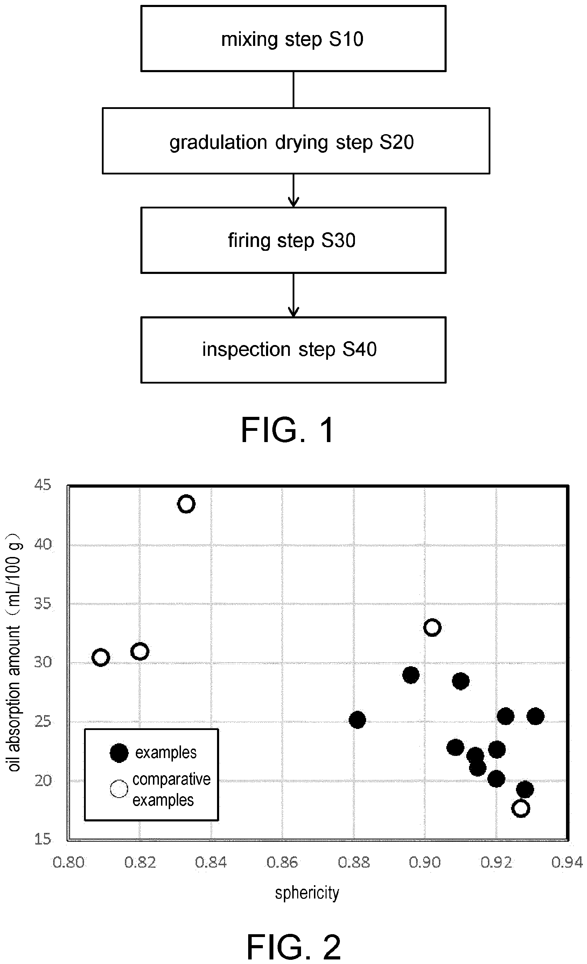

It can be said that the sphericity is a physical parameter that reflects the amount of gaps between the particles between secondary particles. This is because, when the particle size distribution is the same, as the sphericity increases, the gap between the particles becomes smaller, and as a result, the amount of binder required for electrode fabrication can be minimized. In the present embodiment, it was found that this sphericity was one of the factors that influence the powder filling density, and was therefore a requirement for obtaining an appropriate electrode. That is, as the relationship between the oil absorption amount and the sphericity is shown in Fig. 1, it was found that a case where the sphericity A/B was 0.88 ≤ A/B ≤ 1.0 is suitable in order to obtain an oil absorption amount of 19 to 30 mL/100 g. In addition, in Fig. 1, the example is indicated by ●, and the comparative example is indicated by O. The same applies to Figs. 2, 3, 4, and 5 below.

### [Powder Filling Density]

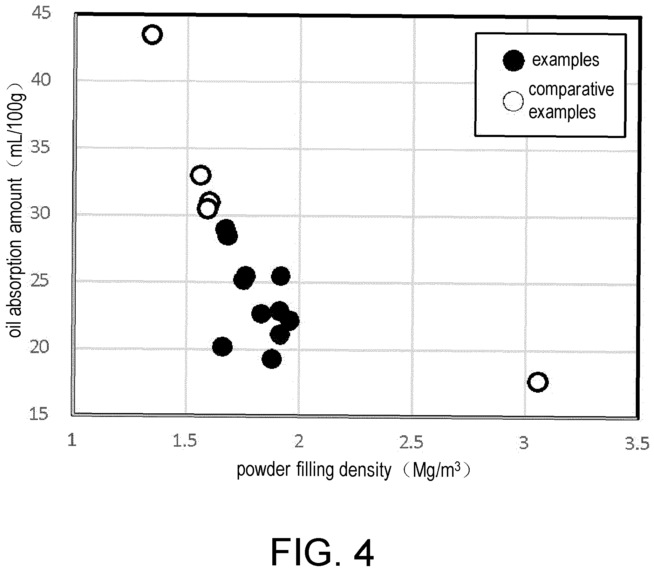

In addition, as shown in Fig. 4, the positive electrode active material according to the present embodiment can control the oil absorption amount within the specified range using the powder filling density as an index. That is, it was found that it was possible to control the oil absorption amount of the positive electrode active material by the powder filling density. The positive electrode active material according to the present embodiment has a powder filling density of 1.65 to 2.20 Mg/m³ when compressed at 0.01 MPa. The powder filling density is preferably 1.65 to 2.10 Mg/m³, more preferably 1.70 to 2.10 Mg/m³, and still more preferably 1.80 to 2.00 Mg/m³. Here, the powder filling density is used to represent the density when a predetermined space is filled with only the positive electrode active material powder. In the present embodiment, the density when a pressure of 0.01 MPa is applied to suppress variation errors in density measurement and enable measurement with good reproducibility is defined as the powder filling density. The method of measuring the powder filling density is as follows, but the pressure value of 0.01 MPa set here is suitable for measuring the filled state without breaking the particles.

When the powder filling density is less than 1.65 Mg/m³, there are many gaps between the particles, which means that a large amount of binder is required for binding during electrode fabrication, and the minimum amount of binder required to obtain the binding force increases. When the amount of the binder added increases, the content of the positive electrode active material in the electrode decreases, which is not preferable because the energy density of the positive electrode decreases. Alternatively, when an electrode is fabricated with a fixed amount of binder in order to ensure a predetermined energy density, the amount of binder is insufficient, resulting in insufficient binding force. This is not preferable because cracks and electrode peeling are caused during pressure molding. When the powder filling density exceeds 2.20 Mg/m³, the number of gaps between the particles is small and the amount of binder required for electrode fabrication is small, but in reality, this means that the particle size is extremely large, the gap between the primary particles and the unevenness of the particles are extremely small. This is not preferable because the total surface area in contact with the electrolytic solution is small, the contact area between the electrolytic solution and the positive electrode active material is also small, and thus sufficient discharge capacity cannot be obtained.

A method for measuring the powder filling density is described below, but the method is not limited to this.

First, 1.0 g of positive electrode active material powder is weighed and filled into a 7 mm × 7 mm square cavity. This is set in an autograph device, the stroke length and test force are measured while pressurizing at a rate of 1 mm/min, and the powder filling density is calculated from the stroke length when the test force is 0.01 MPa.

The present embodiment also relates to oil absorption amount control of the positive electrode active material. The powder filling density is a physical parameter that reflects the amount of gaps between the particles, and is correlated with the oil absorption amount, which indicates the appropriate amount of binder. It can be said that the present invention is a control method in which the lithium transition metal composite powder has a powder filling density of 1.65 to 2.20 Mg/m³ when compressed at 0.01 MPa, and accordingly, the oil absorption amount, based on JIS K5101-13-1, of N-methyl-2-pyrrolidone (NMP) per 100 g of the lithium transition metal composite oxide powder can be 19 to 30 mL/100 g.

This point will be described below. The purpose of the binder that is used when the electrode is fabricated is to bind the positive electrode active materials to each other or the positive electrode active material and the current collecting foil. A positive electrode active material is generally composed of secondary particles in which a plurality of primary particles are aggregated, and each secondary particle contains fine pores and voids. Since the binder is absorbed into these pores and voids, the amount of binder added that is actually required for binding is greater than the required amount of binder predicted based on the particle size distribution based on the model without pores and voids. Practically, it is preferable to increase the electrode density and increase the energy density per volume. Therefore, it is preferable that the content of the positive electrode active material in the electrode be as high as possible and the amount of the binder added be as small as possible. For that purpose, it is better to suppress the number of pores and voids per one secondary particle to some extent. Likewise, it is important to reduce the gap between the particles between the secondary particles in order to minimize the amount of binder added. When the shape of the particles is distorted, the voids between the secondary particles increase, and this is not preferable because the amount of binder added required for electrode fabrication increases. Here, it is very important to estimate in advance the amount of binder added required by the positive electrode active material for production management in electrode manufacturing, and the oil absorption amount is suitable as an index. In the present embodiment, the inventors have come to realize that the powder filling density, which can be measured more easily, is an index that reflects (i) pores and voids in the secondary particles, (ii) gaps between the particles between the secondary particles, and both of them, and it was found that there was a correlation with the above-described oil absorption amount. For this reason, the method for manufacturing a positive electrode active material according to the present embodiment includes an inspection step S40 using the powder filling density when the lithium transition metal composite oxide powder is compressed.

In general, when an electrode is fabricated, a practical electrode density and energy density are set, and the compound proportion of the positive electrode active material, the conductive material, and the binder is designed. Therefore, it is not preferable to increase the amount of binder added from the design value according to the properties of the powder of the positive electrode active material, and a positive electrode active material having properties that can exhibit a binding force even with a predetermined amount of binder added is preferable. The oil absorption amount itself was an index for estimating the necessary amount of the binder, but it was not possible to obtain a design guideline for the positive electrode active material to achieve a suitable oil absorption amount. In the present invention, it is possible to find a correlation between the oil absorption amount and powder physical properties (powder filling density, sphericity, specific surface area, average particle size, and the like) and provide guidelines for designing a positive electrode active material powder for obtaining an appropriate electrode.

### [Average Particle Size of Secondary Particles]

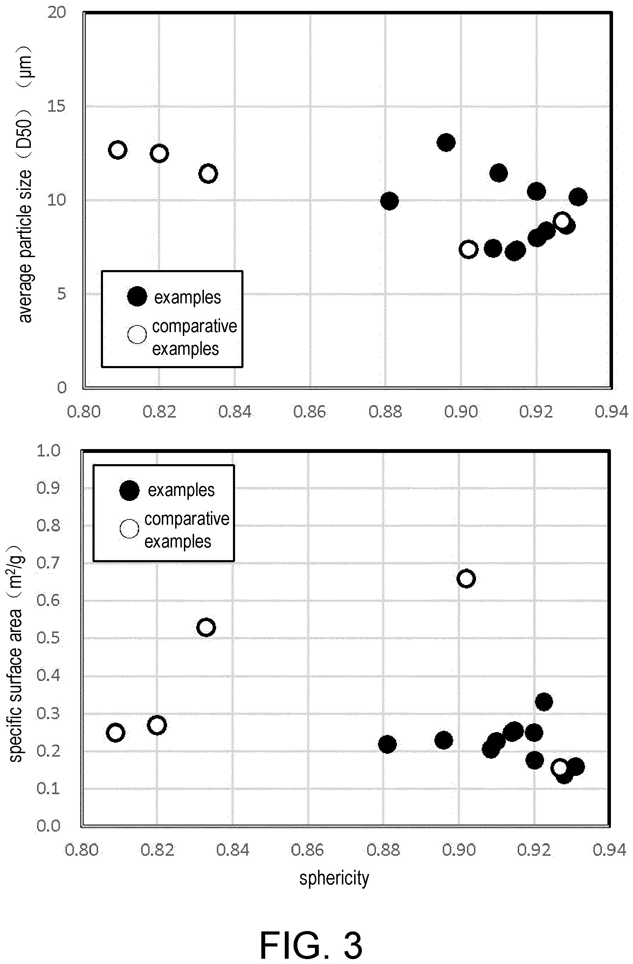

The average particle size of the secondary particles of the positive electrode active material is preferably 6 to 15 µm. More preferably, the average particle size is 7 to 14 µm. The average particle size can be measured with a laser diffraction/scattering type particle size distribution measuring device. When the average particle size is 6 µm or more, the intervals between the particles can be properly maintained and the electrode density can be improved. When the average particle size is 15 µm or less, the powder can be laminated in the thickness direction of the electrode, and high filling becomes possible. Therefore, within the suitable range, the binding force can be maintained even with a predetermined amount of binder added at the time of mixture adjustment. Moreover, a plurality of particles can be laminated in the thickness direction of the electrode, and a good electrode can be manufactured. Fig. 3 shows the relationship between the average particle size (D50) and the sphericity.

### [Specific Surface Area of Secondary Particles]

The specific surface area of the secondary particles of the positive electrode active material is preferably 0.1 to 0.6 m²/g. More preferably, the specific surface area is 0.1 to 0.4 m²/g. The specific surface area is measured by the BET method using nitrogen gas adsorption. When the specific surface area is 0.1 m²/g or more, the contact area between the positive electrode active material and the electrolytic solution can be ensured when operating as a battery, and a sufficient capacity can be obtained. When the specific surface area is 0.6 m²/g or less, the voids in the secondary particles can be suppressed, the powder filling density can be improved, the oil absorption amount can be reduced, and electrode peeling can be suppressed. Therefore, when the specific surface area is within the suitable range, the contact area between the positive electrode active material and the electrolytic solution can be ensured. Further, a specific surface area of 0.6 m²/g or less means that the secondary particles themselves have few voids, and can be coated well during electrode fabrication. Fig. 3 also shows the relationship between the specific surface area and the sphericity.

In order to obtain a high energy density of the electrode, it is essential to avoid electrode peeling in order to increase the content of the positive electrode active material (for example, 95% by mass or more) and manufacture a good electrode. Therefore, the positive electrode active material represented by the compositional formula (1) suitably has an oil absorption amount of 19 to 30 mL/100 g. In order to control the oil absorption amount in this suitable range, the sphericity A/B of the shape of the positive electrode active material is supposed to be 0.88 ≤ A/B ≤ 1.0 as an index of the powder physical properties of the positive electrode active material. Further, the powder filling density when the lithium transition metal composite powder is compressed at 0.01 MPa is supposed to be 1.65 to 2.20 Mg/m³. Then, the positive electrode active material that satisfies this condition is extracted in the inspection step.

### <Lithium Ion Secondary Battery>

Next, a lithium ion secondary battery using the positive electrode active material for a lithium ion secondary battery as a positive electrode will be described.

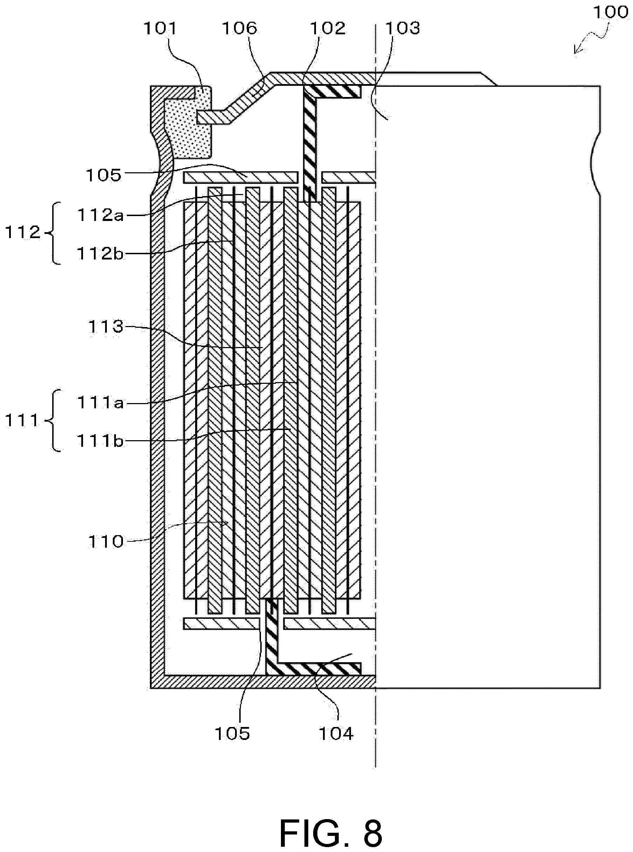

Fig. 8 is a partial cross-sectional view schematically showing an example of a lithium ion secondary battery.

As shown in Fig. 8, a lithium ion secondary battery 100 according to the present embodiment includes a bottomed cylindrical battery can 101 containing a non-aqueous electrolytic solution, and a wound electrode group 110 accommodated inside the battery can 101, and a disk-shaped battery lid 102 that seals the upper opening of the battery can 101.

The battery can 101 and the battery lid 102 are made of, for example, metal materials such as stainless steel and aluminum. A positive electrode 111 includes a positive electrode current collector 111a and a positive electrode mixture layer 111b formed on the surface of the positive electrode current collector 111a. Further, a negative electrode 112 includes a negative electrode current collector 112a and a negative electrode mixture layer 112b formed on the surface of the negative electrode current collector 112a.

The positive electrode current collector 111a is formed of, for example, metal foil such as aluminum or aluminum alloy, expanded metal, punching metal, or the like. The metal foil can have a thickness of, for example, approximately 15 µm or more and 25 µm or less. The positive electrode mixture layer 111b contains the positive electrode active material for a lithium ion secondary battery. The positive electrode mixture layer 111b is formed of, for example, a positive electrode mixture obtained by mixing a positive electrode active material, a conductive material, a binder, and the like.

The negative electrode current collector 112a is made of metal foil such as copper, copper alloy, nickel, and nickel alloy, expanded metal, punching metal, or the like. The metal foil can have a thickness of, for example, approximately 7 µm or more and 10 µm or less. The negative electrode mixture layer 112b contains the negative electrode active material for a lithium ion secondary battery. The negative electrode mixture layer 112b is formed of, for example, a negative electrode mixture obtained by mixing a negative electrode active material, a conductive material, a binder, and the like.

As the negative electrode active material, an appropriate type used in general lithium ion secondary batteries can be used.

As the conductive material, an appropriate type used in general lithium ion secondary batteries can be used. The amount of the conductive material can be, for example, 3% by mass or more and 10% by mass or less with respect to the entire mixture.

As the binder, an appropriate type used in general lithium ion secondary batteries can be used. The amount of the binder can be, for example, 2% by mass or more and 10% by mass or less with respect to the entire mixture.

The positive electrode 111 can be manufactured, for example, according to a general method for manufacturing electrodes for lithium ion secondary batteries. For example, the manufacturing is possible through a mixture preparation step of preparing an electrode mixture by mixing an active material, a conductive material, a binder, and the like in a solvent, a mixture coating step of applying the prepared electrode mixture onto a substrate such as a current collector and then drying it to form an electrode mixture layer, and a molding step of pressure molding the electrode mixture layer.

In the mixture preparation step, for example, an appropriate mixing device such as a planetary mixer, a dispersion mixer, or a rotation/revolution mixer can be used as mixing means for mixing the materials. Examples of the solvent include N-methyl-2-pyrrolidone (NMP), water, N,N-dimethylformamide, N,N-dimethylacetamide, methanol, ethanol, propanol, isopropanol, ethylene glycol, diethylene glycol, glycerin, dimethylsulfoxide, tetrahydrofuran and the like can be used according to the type of the binder.

In order to obtain good coatability, it is necessary to set the oil absorption amount of the positive electrode active material itself composed of the lithium transition metal composite oxide powder within an appropriate range. When evaluating this oil absorption amount, it is preferable to use the same solvent as the solvent used in the mixture adjustment step. Among the above solvents, NMP is highly versatile and preferable because NMP has extremely high solubility, high boiling point, and low freezing point.

In order to increase the density of the electrode and increase the volumetric energy density, it is preferable to decrease the binder ratio and increase the positive electrode active material ratio as much as possible in the mixture adjustment step. For example, when the mass ratio of positive electrode active material: conductive material: binder is usually 92:4:4, the mixture can be adjusted even when the mixing means is manual kneading such as a mortar. However, since the ratio of active material is as small as 92% by mass, it is necessary to further reduce the binder ratio for a positive electrode used in a practical battery. Considering practicality, the ratio of the active material is preferably 96% by mass or more, and for example, mixing is performed with the ratio of positive electrode active material: conductive material:binder = 96:2:2. In this case, since it is important to uniformly disperse the binder, manual kneading such as a mortar is not suitable as mixing means, and the mixture slurry is made using a mixing device such as the planetary mixer, dispersion mixer, and rotation/revolution mixer. The viscosity of the mixture slurry must be within a predetermined range for appropriate coating, and the viscosity of the mixture slurry is adjusted by gradually adding NMP as a solvent while mixing. As described above, in order to fabricate an appropriate electrode with a limited amount of binder added, it is required that the powder itself has few pores and voids and that the amount of gaps between the particles is extremely small. For this purpose, it is necessary to provide an active material powder having an appropriate oil absorption amount, and it is effective to manufacture a positive electrode active material having a high degree of sphericity such that the powder filling density is within a suitable range.

In the mixture slurry coating step, for example, an appropriate coating device such as a bar coater, a doctor blade, or a roll transfer machine can be used as means for applying the prepared mixture slurry. As means for drying the coated mixture slurry, for example, a suitable drying device such as a hot air heating device or a radiation heating device can be used.

In this mixture slurry coating step, when the binder is insufficient or is not uniformly dispersed, a region where the binder does not exist locally may be generated, and the positive electrode active material may aggregate and cause streaking during coating.

In the molding step, for example, an appropriate pressure device such as a roll press can be used as means for pressure molding the electrode mixture layer. The positive electrode mixture layer 111b can have a thickness of, for example, approximately 50 µm or more and 300 µm or less. Further, the negative electrode mixture layer 112b can have a thickness of, for example, approximately 20 µm or more and 150 µm or less. The pressure-molded electrode mixture layer can be cut together with the positive electrode current collector as necessary to form an electrode for a lithium ion secondary battery in a desired shape.

When a positive electrode active material having an oil absorption amount exceeding the suitable range is used, the binder becomes insufficient, and binding within the positive electrode active materials or between the positive electrode active material and the current collecting foil becomes insufficient. When molded in this state, the positive electrode active materials are easily separated from each other by weight, causing cracks, or the binding between the current collecting foil and the positive electrode active material is peeled off. In order to obtain an appropriate electrode, it is important to perform molding by using a positive electrode active material of which the oil absorption amount is within a suitable range, sufficiently dispersing the binder even with a predetermined amount of binder added, and maintaining the binding force within the positive electrode active materials, or between the positive electrode active material and the current collecting foil. When the binder is not insufficient, the electrode density can be improved well in the molding step.

As shown in Fig. 8, the wound electrode group 110 is formed by winding a strip-shaped positive electrode 111 and a strip-shaped negative electrode 112 with a separator 113 interposed therebetween. The wound electrode group 110 is accommodated inside the battery can 101 by being wound around an axis made of, for example, polypropylene, polyphenylene sulfide, or the like.

The lithium ion secondary battery 100 can be used for various applications, for example, portable electronic devices; small power sources such as household electric devices; stationary power sources such as power storage devices, uninterruptible power sources, and power leveling devices; and driving power sources such as ships, railroad vehicles, hybrid railroad vehicles, and hybrid vehicles, electric vehicles.

### [Example]

The present invention will be specifically described below by showing examples, but the technical scope of the present invention is not limited to these.

### [Example 1]

### (1) Manufacturing of Positive Electrode Active Material

Lithium carbonate, nickel hydroxide, cobalt carbonate, manganese carbonate, and titanium oxide were prepared as raw materials, each raw material was weighed such that the molar ratio of the metal elements Li:Ni:Co:Mn:Ti was 1.03:0.90:0.03:0.05:0.02, and pure water was added such that the solid content ratio was 30% by mass. Then, a raw material slurry was prepared by wet pulverization (wet mixing) with a pulverizer such that the average particle size was less than 0.2 µm. In order to suppress the raw material slurry viscosity from increasing, 1.2% by mass of a dispersant was added such that the solid content ratio was 30% by mass.

Subsequently, the obtained raw material slurry was spray-dried with a nozzle-type spray dryer (Model ODL-20 manufactured by Okawara Kakoki Co., Ltd.) to obtain granules having an average particle size of 13 µm. The spray pressure is 0.13 MPa and the spray amount is 260 g/min.

The dried granules were heat-treated to obtain a lithium transition metal composite oxide. Specifically, the granules were heat-treated in a continuous transfer furnace at 400°C for 5 hours in an air atmosphere to obtain a first precursor.

After that, the first precursor was heat-treated (pre-fired) at 700°C for 20 hours in a firing furnace replaced with an oxygen gas atmosphere in an oxygen stream to obtain a second precursor.

After that, the second precursor was heat-treated (mainly fired) at 840°C for 10 hours in a firing furnace replaced with an oxygen gas atmosphere in an oxygen stream. After that, the temperature was lowered at 5°C/min to 740°C and held at 740°C for 4 hours, the temperature drop rate from 740°C to 700°C was adjusted to 5°C/min, and the holding time in the temperature range from 800°C to 700°C was set to 4.3 hours (annealing treatment). As described above, a lithium transition metal composite oxide was obtained.

The average composition of the particles of the lithium transition metal composite oxide can be confirmed by inductively coupled plasma (ICP), atomic absorption spectrometry (AAS), or the like.

The lithium transition metal composite oxide obtained as described above was classified using a sieve with a mesh opening of 45 µm. Table 1 shows the manufacturing conditions.

### (2) Oil Absorption Amount and Powder Physical Properties

A powder of the lithium transition metal composite oxide was used as a sample, and the oil absorption amount and the powder physical properties of this powder sample were evaluated.

### (Oil Absorption Amount)

The oil absorption amount of the powder sample was measured according to JIS K5101-13-1, and N-methyl pyrrolidone (NMP) was used as the solvent. A 5.0 g powder sample is weighed out and placed in a heap on a flat vat. NMP is sucked up with a poly dropper (2 mL capacity) and weighed. Next, the powder sample is kneaded with a spatula while dropping NMP, and the dropping and kneading are continued until the powder sample becomes clay-like as a whole. When the amount of NMP was excessive, a state where the droplets were not absorbed by the powder sample and remained on the surface could be visually confirmed. The amount of NMP dropped up to this time was converted into the oil absorption amount per 100 g of the powder sample. The measurement results are shown in Table 2.

### (Powder Filling Density)

The powder filling density of the fired powder was measured using an autograph. First, 1.0 g of fired powder was put into a cavity of 7 mm × 7 mm square, set in an autograph device, and a load of a test force of 0 to over 500 N was applied at a speed of 1 mm/min. The pressure applied to the fired powder calculated from the cross-sectional area of the cavity ranged from 0.002 MPa to over 10 MPa. The stroke length when the load was applied was measured every 0.1 seconds, and the powder filling density for each pressure was calculated. Then, the powder filling density at 0.01 MPa was read and used as the powder filling density of the fired powder. The measurement results are shown in Table 2.

### (Sphericity)

The fired powder was photographed at 1000 times with a scanning electron microscope (SEM), and from this SEM photograph, 20 particles having a particle size within the range of D50 × 0.5 to D50 × 2.0 based on the average particle size D50 were extracted, and the short axis A and the long axis B were measured respectively. The short axis A was the diameter of a circle inscribed in the particle image, and the long axis B was the diameter of the circle circumscribing the particle image. The A/B of the 20 particles was averaged to give the sphericity of the sample. The measurement results are shown in Table 2.

### (Average Particle Size, Specific Surface Area)

The average particle size (D50) of the secondary particles of the fired powder of the positive electrode active material was measured with a laser diffraction type particle size distribution measuring instrument. The specific surface area was measured by the BET method using gas adsorption using an automatic specific surface area measuring device. The measurement results are shown in Table 2.

### (3) Manufacturing of Electrode

A positive electrode (electrode) for a lithium ion secondary battery was fabricated using the synthesized positive electrode active material.

The obtained positive electrode active material, a carbon-based conductive material, and a binder previously dissolved in N-methyl-2-pyrrolidone (NMP) were mixed at a mass ratio of 96:2:2.

Then, the mixture slurry obtained by mixing while adding NMP to have a predetermined viscosity is applied to both surfaces of the positive electrode current collecting foil made of aluminum foil having a thickness of 15 µm such that the coating amount is 46 mg/cm².

Next, the mixture slurry applied to the positive electrode current collector was heat-treated at 120°C to distill off the solvent to form a positive electrode mixture layer. After that, the positive electrode mixture layer was repeatedly pressure-molded by hot pressing five times, and punched out to a size of 25 mm × 41 mm to obtain a positive electrode.

### (4) Method for Evaluating Coatability of Electrode

The state of the electrode after pressing until the electrode density after molding reaches 3.8 Mg/m³ or more is visually checked. A case where there are no defects such as cracks, peeling, or breakage, is defined as "well", and a case where the electrode density does not reach 3.8 Mg/m³ or a case where there is any of the above-mentioned defects, is defined as "unacceptable". The measurement results are shown in Table 2.

### [Example 2]

The first precursor was obtained in the same manner as in Example 1 except that aluminum oxide powder was used as the Al raw material, and each raw material was weighed such that the molar ratio of the metal elements Li:Ni:Co:Mn:Al:Ti was 1.03:0.88:0.03:0.05:0.01:0.03, and a positive electrode active material was synthesized and evaluated in the same manner as in Example 1 except that the heat treatment (main firing) temperature of the second precursor was 820°C.

### [Example 3]

Each raw material was weighed in the same manner as in Example 2 except that lithium hydroxide was used as the Li raw material. Next, only the raw materials excluding lithium hydroxide were wet pulverized such that the solid content ratio was 18% by mass, and granules were obtained in the same manner as in Example 2 using a spray dryer. A dispersant was not added as a countermeasure against thickening because the solid content ratio during wet pulverization was small. This granule was subjected to a dehydration heat treatment at 600°C to convert the hydroxide to an oxide to obtain the first precursor. A predetermined amount of lithium hydroxide corresponding to the initially set molar ratio of the metal elements was added to the obtained first precursor, and dry-mixed with a V-type mixer to obtain a raw material mixed powder.

This raw material mixed powder was heat-treated (pre-fired) for 10 hours at 500°C in a firing furnace in which the atmosphere of the raw material mixture is replaced with an oxygen gas atmosphere in an oxygen stream to obtain the second precursor, and the positive electrode active material was synthesized by performing the main firing in the same manner as Example 2. In addition, evaluation was performed in the same manner.

### [Example 4]

A second precursor was obtained in the same manner as in Example 2 except that the solid content ratio during wet pulverization was 40% by mass (2.0% by mass of the dispersant), and the heat treatment temperature was set to 840°C and the positive electrode active material was synthesized in the same manner as in Example 1. In addition, evaluation was performed in the same manner.

### [Example 5]

A positive electrode active material was synthesized in the same manner as Example 3 except that each raw material was weighed such that the molar ratio of the metal elements Li:Ni:Co:Mn:Al:Ti was 1.03:0.90:0.03:0.01:0.03:0.03, and the heat treatment conditions were changed to 800°C. In addition, evaluation was performed in the same manner.

### [Examples 6 to 11 and Comparative Example 5]

A positive electrode active material was synthesized in the same manner as Example 3 except that each raw material was weighed such that the molar ratio of the metal elements Li:Ni:Co:Al:Ti was 1.03:0.92:0.03:0.02:0.03, and the heat treatment conditions were changed to 780°C. However, the pre-firing stage and annealing treatment conditions were changed as appropriate. In addition, evaluation was performed in the same manner.

### [Comparative Example 1]

A positive electrode active material was synthesized in the same manner as in Example 1, except that the solid content ratio during wet pulverization was 50% by mass. In addition, evaluation was performed in the same manner.

### [Comparative Example 2]

A positive electrode active material was synthesized in the same manner as in Example 2, except that the solid content ratio during wet pulverization was 50% by mass. In addition, evaluation was performed in the same manner.

### [Comparative Example 3]

A positive electrode active material was synthesized in the same manner as in Example 2, except that the main firing temperature was 800°C. In addition, evaluation was performed in the same manner.

### [Comparative Example 4]

A positive electrode active material was synthesized in the same manner as in Example 2, except that the solid content ratio during wet pulverization was 50% by mass and the main firing temperature was 810°C. In addition, evaluation was performed in the same manner.

The composition of the positive electrode active material synthesized in each example and comparative example, the slurry solid content ratio, the amount of dispersant added, the main firing temperature, the powder physical properties (average particle size, specific surface area, sphericity, powder filling density at 0.01 MPa, oil absorption amount), and coatability of electrodes are shown in Tables 1 and 2.

For Examples 6 to 11 and Comparative Example 5, which have the same composition such as the Ni ratio, a lithium ion secondary battery was fabricated using the synthesized positive electrode active material as a positive electrode material, and the discharge capacity of the lithium ion secondary battery was acquired. In this example, the fabricated positive electrode active material, a carbon-based conductive material, and a binder previously dissolved in N-methyl-2-pyrrolidone (NMP) were mixed at a mass ratio of 92.5:5:2.5. Then, the uniformly mixed positive electrode mixture slurry was applied onto a positive electrode current collector made of aluminum foil having a thickness of 20 µm such that the coating amount was 10 mg/cm². Next, the positive electrode mixture slurry applied to the positive electrode current collector was heat-treated at 120°C to distill off the solvent to form a positive electrode mixture layer. After that, the positive electrode mixture layer was pressure-molded by a hot press, and punched out to a circular shape with a diameter of 15 mm to obtain a positive electrode.

Subsequently, a lithium ion secondary battery was fabricated using the fabricated positive electrode, negative electrode, and separator. Metallic lithium punched into a circular shape with a diameter of 16 mm was used as the negative electrode. As the separator, a polypropylene porous separator having a thickness of 30 µm was used. A lithium ion secondary battery was assembled by making the positive electrode and the negative electrode opposed to each other in the non-aqueous electrolytic solution with the separator interposed therebetween. As the non-aqueous electrolytic solution, a solution was used in which LiPF₆ was dissolved to a concentration of 1.0 mol/L in a mixed solvent of ethylene carbonate and dimethyl carbonate at a volume ratio of 3:7.

The fabricated lithium ion secondary battery was charged at a constant current/constant voltage of 40 A/kg based on the mass of the positive electrode mixture and an upper limit potential of 4.3 V in an environment of 25°C. Then, the battery was discharged to a lower limit potential of 2.5 V at a constant current of 40 A/kg based on the mass of the positive electrode mixture, and the discharge capacity (initial capacity) was measured. The measurement results are shown in Table 2.

**[Table 1]**

| | Li raw material | Li₁₊ₐNi_{b}Co_{c}M_{d}XₑO_{2+α} | | | | | | Slurry solid content (% by mass) | Amount of dispersant added (% by mass) | Firing temperatu re (°C) |
|---|---|---|---|---|---|---|---|---|---|---|
| | | a | b | c | d | | e | | | |
| | | Li | Ni | Co | Mn | Al | Ti | | | |
| Example 1 | Li₂CO₃ | 0.03 | 0.90 | 0.03 | 0.05 | - | 0.02 | 30 | 1.2 | 840 |
| Example 2 | Li₂CO₃ | 0.03 | 0.88 | 0.03 | 0.05 | 0.01 | 0.03 | 30 | 1.2 | 820 |
| Example 3 | LiOH | 0.03 | 0.88 | 0.03 | 0.05 | 0.01 | 0.03 | 18 | 0 | 820 |
| Example 4 | Li₂CO₃ | 0.03 | 0.88 | 0.03 | 0.05 | 0.01 | 0.03 | 40 | 2.0 | 840 |
| Example 5 | LiOH | 0.03 | 0.90 | 0.03 | 0.01 | 0.03 | 0.03 | 18 | 0 | 800 |
| Example 6 | LiOH | 0.03 | 0.92 | 0.03 | - | 0.02 | 0.03 | 16 | 0 | 780 |
| Example 7 | LiOH | 0.03 | 0.92 | 0.03 | - | 0.02 | 0.03 | 16 | 0 | 780 |
| Example 8 | LiOH | 0.03 | 0.92 | 0.03 | - | 0.02 | 0.03 | 16 | 0 | 780 |
| Example 9 | LiOH | 0.03 | 0.92 | 0.03 | - | 0.02 | 0.03 | 16 | 0 | 780 |
| Example 10 | LiOH | 0.03 | 0.92 | 0.03 | - | 0.02 | 0.03 | 16 | 0 | 780 |
| Example 11 | LiOH | 0.03 | 0.92 | 0.03 | - | 0.02 | 0.03 | 16 | 0 | 780 |
| Comparative Example 1 | Li₂CO₃ | 0.03 | 0.90 | 0.03 | 0.05 | - | 0.02 | 50 | 2.0 | 840 |
| Comparative Example 2 | Li₂CO₃ | 0.03 | 0.88 | 0.03 | 0.05 | 0.01 | 0.03 | 50 | 2.0 | 820 |
| Comparative Example 3 | Li₂CO₃ | 0.03 | 0.88 | 0.03 | 0.05 | 0.01 | 0.03 | 30 | 1.2 | 800 |
| Comparative Example 4 | Li₂CO₃ | 0.03 | 0.88 | 0.03 | 0.05 | 0.01 | 0.03 | 50 | 2.0 | 810 |
| Comparative Example 5 | LiOH | 0.03 | 0.92 | 0.03 | - | 0.02 | 0.03 | 16 | 0 | 780 |

**[Table 2]**

| | Average particle size (D50) (µm) | Specific surface area (m²/g) | Sphericity | Powder filling density @ 0.01 MPa (Mg/m³) | Oil absoption amount (mL/100 g) | Coatability | Initial capacity (Ah/kg) |
|---|---|---|---|---|---|---|---|
| Example 1 | 13.1 | 0.23 | 0.90 | 1.67 | 29 | Good | - |
| Example 2 | 10.0 | 0.22 | 0.88 | 1.75 | 25 | Good | - |
| Example 3 | 10.2 | 0.16 | 0.93 | 1.76 | 26 | Good | - |
| Example 4 | 11.5 | 0.23 | 0.91 | 1.68 | 29 | Good | - |
| Example 5 | 10.5 | 0.25 | 0.92 | 1.66 | 20 | Good | - |
| Example 6 | 8.7 | 0.14 | 0.93 | 1.88 | 19 | Good | 184 |
| Example 7 | 7.4 | 0.26 | 0.91 | 1.91 | 21 | Good | 186 |
| Example 8 | 7.3 | 0.25 | 0.91 | 1.96 | 22 | Good | 191 |
| Example 9 | 8.0 | 0.18 | 0.92 | 1.83 | 23 | Good | 207 |
| Example 10 | 7.5 | 0.21 | 0.91 | 1.91 | 23 | Good | 202 |
| Example 11 | 8.4 | 0.33 | 0.92 | 1.92 | 26 | Good | 211 |
| Comparative Example 1 | 12.5 | 0.27 | 0.82 | 1.60 | 31 | Unacceptable | - |
| Comparative Example 2 | 12.7 | 0.25 | 0.81 | 1.59 | 31 | Unacceptable | - |
| Comparative Example 3 | 7.4 | 0.66 | 0.90 | 1.56 | 33 | Unacceptable | - |
| Comparative Example 4 | 11.4 | 0.53 | 0.83 | 1.34 | 44 | Unacceptable | - |
| Comparative Example 5 | 8.9 | 0.16 | 0.93 | 3.06 | 18 | Good | 181 |

Compared to Example 1, in Comparative Example 1, the amount of dispersant added was increased due to the effect of increasing the solid content ratio when mixing the raw materials, and the amount of dispersant contained per one droplet during spray drying granulation drying increased. As a result, the sphericity of secondary particles decreased from 0.90 to 0.82, and the powder filling density also decreased from 1.67 Mg/m³ to 1.60 Mg/m³. As a result, the oil absorption amount increased from 29 mL/100 g to 31 mL/100 g, and the coatability of the electrode became unacceptable.

Compared to Example 2, Comparative Example 3 had a lower firing temperature. Therefore, since the specific surface area is large and the average particle size is small, the sphericity is as high as 0.90, but the powder filling density is as low as 1.56 Mg/m³. It is possible to determine that this is because voids remain in the secondary particles due to the low-temperature firing, and the powder filling density did not improve even though the sphericity was high, and the oil absorption amount increased to 33 mL/100 g. As a result, the coatability becomes unacceptable.

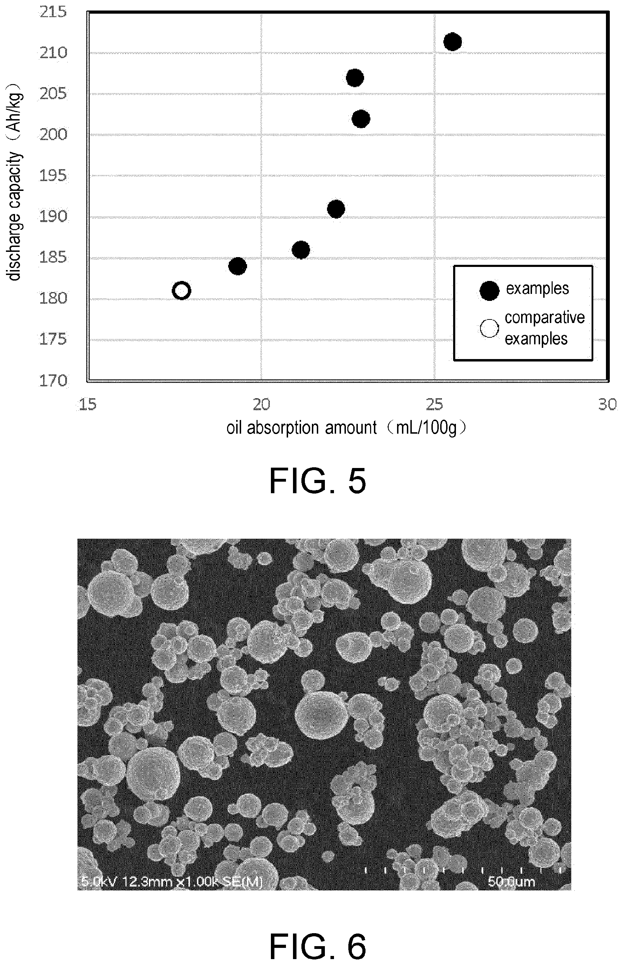

Fig. 5 shows the relationship between the discharge capacity and the oil absorption amount, and it can be seen that there is a correlation between the oil absorption amount and the discharge capacity. In Examples 6 to 11, the oil absorption amount was 19 to 26 mL/100 g, whereas in Comparative Example 5, the oil absorption amount was reduced to 18 mL/100 g. As a result, the discharge capacity decreased from 184 Ah/kg to 211 Ah/kg to 181 Ah/kg. Further, Examples 9 to 11 have an oil absorption amount of 23 to 26 mL. As a result, a higher discharge capacity of 202 Ah/kg to 211 Ah/kg was obtained.

Considering the results of other examples and comparative examples, when the oil absorption amount is 19 to 30 mL/100 g, high capacity and good coatability will be achieved, and this suitable range of oil absorption amount is achieved when the powder filling density at 0.01 MPa is 1.65 to 2.20 Mg/m³.

Further, it can be seen that the specific surface area is preferably 0.1 to 0.6 m²/g and the average particle size is 6 to 15 µm in order to make the powder filling density within a suitable range.

## Claims

1. A positive electrode active material for a lithium ion secondary battery comprising a lithium transition metal composite oxide powder represented by formula (1) below, having secondary particles in which a plurality of primary particles are aggregated, wherein
an oil absorption amount, based on JIS K5101-13-1, of N-methyl-2-pyrrolidone per 100 g of the lithium transition metal composite oxide powder is 19 to 30 mL/100 g, and
a sphericity represented by a ratio A/B of a short axis A and a long axis B of the secondary particles measured from an SEM image is 0.88 ≤ A/B ≤ 1.0.
Li₁₊ₐNi_{b}Co_{c}M_{d}XₑO_{2+α} (1)
[In compositional formula (1), M is at least one element selected from Al and Mn, X is at least one element other than Li, Ni, Co, Al, and Mn, and a, b, c, d, e, and α are respectively numbers that satisfy -0.1 ≤ a ≤ 0.1, 0.8 ≤ b < 1.0, 0 ≤ c ≤ 0.2, 0 ≤ d ≤ 0.2, 0 ≤ e ≤ 0.05, b + c + d + e = 1, and -0.2 ≤ α ≤ 0.2.]

2. The positive electrode active material for a lithium ion secondary battery according to claim 1, wherein
the lithium transition metal composite oxide powder has an average particle size of 6 to 15 µm and a specific surface area of 0.1 to 0.6 m²/g.

3. The positive electrode active material for a lithium ion secondary battery according to claim 1 or 2, wherein
the lithium transition metal composite oxide powder has a powder filling density of 1.65 to 2.20 Mg/m³ when compressed at 0.01 MPa.

4. A lithium ion secondary battery comprising
a positive electrode containing the positive electrode active material for a lithium ion secondary battery according to any one of claims 1 to 3.
